# EUROPÄISCHE PATENTSCHRIFT

(11) **EP 0 781 683 B1**
(45) Veröffentlichungstag und Bekanntmachung des Hinweises auf die Patenterteilung: **24.01.2001**
(21) Anmeldenummer: 96118803.4
(22) Anmeldetag: 23.11.1996
(51) Int. Cl.: B60N 2/14, B60N 3/10

(54) **Gefässhalterung**
Container holder
Support pour récipients

(30) Priorität: 29.11.1995 US 564528
(43) Veröffentlichungstag der Anmeldung: 02.07.1997
(73) Patentinhaber: DEERE & COMPANY, Moline, Illinois 61265-8098 (US)
(72) Erfinder: Cooley, Robert Merle, Waterloo, Iowa 50701 (US)
(74) Vertreter: Feldmann, Bernhard

(56) Entgegenhaltungen:
- US-A- 4 721 216
- US-A- 5 102 085
- US-A- 5 108 059
- US-A- 5 279 489
- US-A- 5 326 064

## Beschreibung

Die Erfindung bezieht sich auf eine Gefäßhalterung mit einem Gehäuse und einer im wesentlichen zylindrischen Gehäusewand, die eine Aussparung umschließt und die einen unteren ersten Rand besitzt, der mit einer unteren Bodenfläche verbunden ist und mit einem oberen zweiten Rand, wobei sich von dem zweiten Rand ein Sims radial nach außen erstreckt.

Es ist wünschenswert in einem Fahrzeug einen Halter zur Aufnahme von Behältern verschiedener Größe, wie z.B. Getränkedosen und Flaschen und Kaffeebecher, anzubringen. Es wurden verschiedene Ausführungen vorgeschlagen, um dieses Problem zu lösen.

Das US-Patent 5,102,085 zeigt zum Beispiel eine gattungsgemäße Gefäßhalterung mit einem hohlen zylindrischen Einsatz, der in einer zylindrischen Basis verschiebbar ist. Im Unterteil des Einsatzes ist eine Art Kragen mit einer engeren Öffnung vorgesehen, die einen hohen, schlanken Behälter aufnehmen kann, wenn der Einsatz nach oben in eine erste Position ausgefahren ist. Zu einer zweiten Position, wenn der Einsatz nach unten geschoben ist, können Gefäße mit größerem Durchmesser aufgenommen werden.

Die US-Patente 5,326,064 und US 4,721,216 zeigen jeweils einen Getränkehalter dessen oberer Abschnitt einen größeren Durchmesser und dessen unterer Abschnitt einen kleineren Durchmesser aufweist. Bei solch einem Halter besteht die Möglichkeit, daß ein hoher, schmaler Behälter kippt, da er nur an seinem unteren Ende gehalten wird.

Die mit der Erfindung zu lösende Aufgabe wird darin gesehen, eine Halterung vorzuschlagen, durch die die eingangs genannten Probleme vermieden werden, die einfach herzustellen ist und die geeignet ist eine große Anzahl in Form und Größe verschiedenartige Behälter bequem aufzunehmen und sicher zu halten.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Eine erfindungsgemäße Ausgestaltung der Gefäßhalterung enthält ein Gehäuse, das eine im wesentlichen zylindrische Aussparung und ein Sims bildet, welches sich radial von einem oberen Rand der Aussparung nach außen erstreckt. Ein bogenförmiges Kragenelement ist schwenkbar in dem Gehäuse gelagert und ist aus einer ersten Stellung, in der es von dem Sims abgewandt ist, in eine zweite Stellung bringbar, in der es zumindestens teilweise das Sims überlappt. Sofern sich das Kragenelement in seiner ersten Stellung befindet bildet, das Kragenelement und das Sims zwischen sich eine Öffnung, die enger ist als das obere Ende der Aussparung. Das Kragenelement besitzt eine Lasche, die von Schlitzen in der äußeren Gehäusewand, die sich entlang der Öffnung der Aussparung erstreckt, aufgenommen wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Draufsicht einer erfindungsgemäßen Gefäßhalterung;
- Fig. 2: einen Schnitt entlang der Linie 2-2 aus Fig. 1;
- Fig. 3: eine perspektivische Darstellung einer erfindungsgemäßen Gefäßhalterung.

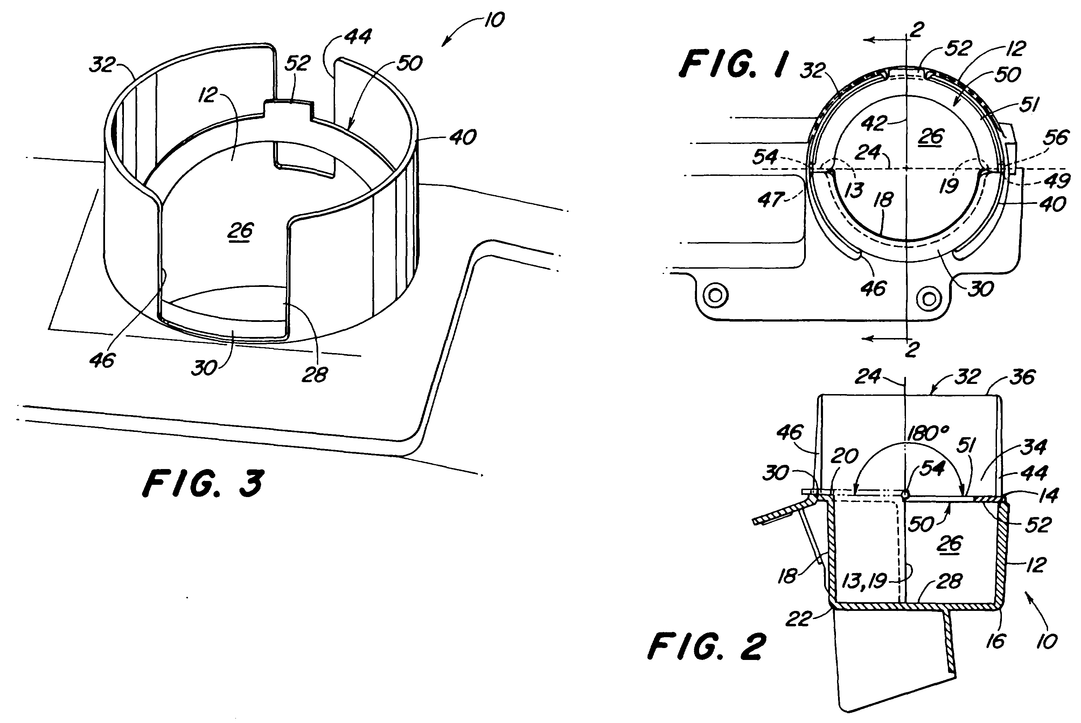

Gemäß der Fig. 1 enthält eine Gefäßhalterung ein Gehäuse 10. Dieses setzt sich aus einer ersten in einem weiteren Bogen gekrümmten Seitenwand 12 mit einem oberen Rand 14 und einem unteren Rand 16 und einer zweiten in einem engeren Bogen gekrümmten Seitenwand 18 mit einem oberen Rand 20 und einem unteren Rand 22 zusammen. Die erste und zweite Seitenwand 12 und 18 sind mittels sich radial und axial erstreckender Wände 13 und 19 entlang einer ersten Ebene 24 miteinander verbunden und bilden so eine im wesentlichen zylindrische Aussparung 26 mit einer zu der ersten Ebenen 24 parallelen Achse. Eine Bodenfläche 28 ist mit den unteren Rändern 16, 22 der ersten und zweiten Seitenwand 12, 18 verbunden.

Das Gehäuse 10 bildet weiter ein kreisbogenförmiges Sims 30, das in einem Winkelbereich von ungefähr 180 Grad über den oberen Rand 20 des zweiten Seitenwandelements 18 radial nach außen vorsteht. Der äußere Krümmungradius des Sims 30 ist im wesentlichen gleich dem Krümmungsradius der ersten Seitenwand 12, und der innere Krümmungsradius des Sims 30 ist im wesentlichen gleich dem Krümmungsradius der zweiten Seitenwand 18.

Das Gehäuse 10 enthält außerdem eine abschnittsweise zylindrische dritte Seitenwand 32, die sich im wesentlichen axial von einem unteren Ende 34 zu einem oberen freien Ende 36 erstreckt. Das untere Ende 34 ist mit einer äußeren Kante des Sims 30 und mit dem oberen Rand 14 der ersten Seitenwand 12 verbunden.

Das Gehäuse 10 enthält ferner eine abschnittsweise zylindrische vierte Seitenwand 40, sie sich im wesentlichen axial von einem unteren Ende zu einem oberen freien Ende erstreckt. Auch das untere Ende der vierten Seitenwand 40 ist mit einer äußeren Kante des Sims 30 und mit dem oberen Rand 14 der ersten Seitenwand 12 verbunden.

Die dritte und vierte Seitenwand 32, 40 bilden zusammen eine gebogene Wand mit Aussparungen, die im wesentlichen das obere Ende der Aussparung 26 umrundet und im wesentlichen die Aussparung 26 axial verlängert. Die dritte und vierte Wand 32, 40 sind zueinander beabstandet und liegen beidseits einer zweiten Ebene 42, die senkrecht zur ersten Ebene 24 ausgerichtet ist. Die erste, dritte und vierte Wand begrenzen einen ersten Schlitz 44, und der Sims 30 sowie die dritte und vierte Wand 32, 40 begrenzen einen zweiten Schlitz 46. Die Schlitze 44 und 46 befinden sich auf gegenüberliegenden Seiten der ersten Ebene 24. In dem Gehäuse 10 befinden sich in der Nähe der Simsebene Drehzapfenlöcher 47 und 49, die in die erste Ebene 24 ausgerichtet sind. Der Schlitz 46 ist vorzugsweise breiter als der Schlitz 44. Er ist so ausgerichtet, daß er bequem einen Henkel eines nicht gezeigten Getränkebechers aufnehmen kann.

Die Gefäßhalterung enthält ferner ein bogenförmiges Kragenelement 50, das über eine Drehachse 54, 56 schwenkbar mit den unteren Enden der dritten und vierten Seitenwand 32, 40 oder mit den oberen Enden der Seitenwände 12 und 18 verbunden ist, wobei die Drehachse im wesentlichen horizontal ausgerichtet durch die Drehzapfenlöcher 47 und 49 bestimmt wird. Das Kragenelement 50 hat einen bogenförmigen Körper 51, eine Lasche 52, die sich von einem zentralen Teil des Körpers 52 nach außen erstreckt, und ein Paar Drehzapfen 54, 56, die sich aus gegenüberliegenden Enden des Körpers 51 radial nach außen erstrecken und die von den korrespondieren Drehzapfenlöchern 47 und 49 aufgenommen werden. Der Körper 51 hat einen inneren Krümmungradius, der kleiner ist als der Krümmungsradius der ersten Seitenwand 12 und der im wesentlichen gleich dem Krümmungsradius der zweiten Seitenwand 18 ist. Der Körper 51 hat einen äußeren Krümmungsradius, der im wesentlichen gleich dem Krümmungsradius der ersten Seitenwand 12 ist.

Das segmentförmige Kragenelement 50 läßt sich in eine erste Position (in Fig. 2 durch durchgezogene Linien dargestellt) schwenken, in der die Lasche 52 von dem ersten Schlitz 44 aufgenommen wird und auf der oberen Kante 14 der ersten Seitenwand 12 aufliegt. Das Kragenelement 50 läßt sich in eine zweite Position (in Fig. 2 durch strichpunktierte Linien dargestellt) schwenken, in der die Lasche 52 von dem zweiten Schlitz 46 aufgenommen wird und auf dem oberen Ende des Sims 30 aufliegt.

Wenn sich das Kragenelement 50 in seiner ersten Position befindet, bilden das Kragenelement 50 und das Sims 30 zusammen eine fast kreisförmige Simsoberfläche, die einen nicht gezeigten Getränkebecher passender Größe im oberen Bereich des Halterzusammenbaus derart halten kann, daß ein leichter Zugang für die den Becher nutzende Person ermöglicht wird. Wenn das Kragenelement 50 sich in dieser ersten Position befindet, schließen ferner das Kragenelement 50 und das Sims 30 gemeinsam eine Öffnung ein, die kleiner ist als der obere Rand der Aussparung 26, so daß sich eine enge Aussparung für einen höheren, schmaleren Behälter, wie eine nicht gezeigte Erfrischungsgetränkeflasche, ergibt. Vorzugsweise kann ein nicht gezeigter Henkel eines Bechers in dem größeren Schlitz 46 positioniert werden.

Wenn sich das Kragenelement 50 in seiner zweiten Position befindet, überlappt das Kragenelement 50 im wesentlichen das Sims 30 und es bietet sich ein vergrößerter Zugang zu dem unteren Teil der Aussparung 26, so daß ein höheres, schlankes Getränkegefäß, beispielsweise eine nicht gezeigte Dose oder Flasche, durch die Aussparung 26 aufgenommen werden und durch die Bodenfläche 28 getragen werden kann.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung im Rahmen der Patentansprüche fallen.

## Patentansprüche

1. Gefäßhalterung mit einem Gehäuse (10) und wenigstens einer im wesentlichen zylindrischen Gehäusewand (12, 18), die eine Aussparung (26) umschließt und die einen unteren ersten Rand (16, 22) der mit einer unteren Bodenfläche (28) verbunden ist, und einen oberen zweiten Rand (14, 20) aufweist, wobei sich von dem zweiten Rand (20) ein Sims (30) radial nach außen erstreckt, dadurch gekennzeichnet, daß das Sims (30) lediglich an einen Teilabschnitt des Umfanges des zweiten Randes (14) angreift und daß die Gefäßhalterung ein bogenförmiges, schwenkbar mit der Gehäusewand (12, 18) verbundenes Kragenelement (50) aufweist, das aus einer ersten Position, in der es dem Sims (30) abgewandt ist, in eine zweite Position schwenkbar ist, in der es zumindest teilweise das Sims (30) überlappt, wobei das Kragenelement (50) und das Sims (30), sofern sich das Kragenelement (50) in seiner ersten Position befindet, zwischen sich eine Öffnung einschließen, die kleiner ist als das durch den zweiten Rand (14, 20) begrenzte offene Ende der Aussparung (26), wenn sich das Kragenelement (50) in seiner zweiten Position befindet.

2. Gefäßhalterung nach Anspruch 1, dadurch gekennzeichnet, daß das Gehäuse (10) eine gekrümmte äußere Gehäusewand (32, 40) aufweist, die sich von einem unteren Ende (34) zu einem oberen freien Ende (36) erstreckt und daß das untere Ende (34) der Gehäusewand (32, 40) abschnittsweise mit einer äußeren Kante des Sims (30) und dem oberen Rand (14) der Gehäusewand (12) verbunden ist.

3. Gefäßhalterung nach Anspruch 2, dadurch gekennzeichnet, daß in der Gehäusewand (32, 40) wenigstens ein erster und zweiter, nach oben offener Schlitz (44, 46) vorgesehen ist, die sich auf gegenüberliegenden Seiten der Gefäßhalterung befinden, und daß das Kragenelement (50) in seinem mittleren Bereich eine sich nach außen erstreckende Lasche (52) trägt, die von dem ersten Schlitz (44) aufgenommen wird, wenn sich das Kragenelement (50) in seiner ersten Position befindet und die von dem zweiten Schlitz (46) aufgenommen wird, wenn sich das Kragenelement (50) in seiner zweiten Position befindet.

4. Gefäßhalterung nach einem der Ansprüche 1 bis 3, dadurch gekennzeichnet, daß sich die im wesentlichen zylindrische Gehäusewand in Umfangsrichtung wenigstens aus einer ersten Seitenwand (12) mit einem oberen Rand (14) und einem unteren Rand (16) sowie einer zweiten Seitenwand (18) mit einem oberen Rand (20) und einem unteren Rand (22) zusammensetzt, daß die Bodenfläche (28) mit den unteren Rändern (16, 22) der ersten und zweiten Seitenwand (12, 18) verbunden ist und daß die Seitenwände (12, 18) miteinander verbunden sind, um die Aussparung (26) zu bilden.

5. Gefäßhalterung nach Anspruch 4, durch gekennzeichnet, daß die erste Seitenwand (12) einen größeren Krümmungsradius als die zweite Seitenwand (18) aufweist.

6. Gefäßhalterung nach einem der Anspruch 4 oder 5, dadurch gekennzeichnet, daß das Sims (30) mit einem oberen Rand (20) der zweiten Seitenwand (18) verbunden ist.

7. Gefäßhalterung nach einem der Ansprüche 4 bis 6, dadurch gekennzeichnet, daß das Sims (30) einen äußeren Krümmungsradius aufweist, der im wesentlichen dem Krümmungsradius der ersten Seitenwand (12) entspricht.

8. Gefäßhalterung nach einem der Ansprüche 4 bis 7, dadurch gekennzeichnet, daß das Kragenelement (50) einen inneren Krümmungsradius aufweist, der kleiner ist als der Krümmungsradius der ersten Seitenwand (12).

9. Gefäßhalterung nach einem der Ansprüche 4 bis 8, dadurch gekennzeichnet, daß das Kragenelement (50) einen äußeren Krümmungsradius aufweist, der im wesentlichen dem Krümmungsradius der ersten Seitenwand (12) entspricht.

10. Gefäßhalterung nach einem der Ansprüche 4 bis 9, dadurch gekennzeichnet, daß das Kragenelement (50) in seiner ersten Position auf dem oberen Rand (14) der ersten Seitenwand und in seiner zweiten Position auf dem Sims (30) aufliegt.

11. Gefäßhalterung nach einem der Ansprüche 4 bis 10, dadurch gekennzeichnet, daß die erste und zweite Seitenwand (12, 18) entlang einer ersten Ebene (24) miteinander verbunden sind, die zur Achse der Aussparung (26) parallel ist.

12. Gefäßhalterung nach einem der Ansprüche 2 bis 11, dadurch gekennzeichnet, daß die äußere Seitenwand einen ersten, wenigstens teilweise zylindrischen Wandteil (32), und einen zweiten, wenigstens teilweise zylindrischen Wandteil (40), enthält, die sich im wesentlichen axial von einem unteren Ende (34) zu einem oberen freien Ende (36) erstrecken und deren untere Enden (34) mit einer äußeren Kante des Sims (30) sowie mit dem oberen Ende (14) der ersten Seitenwand (12) verbunden sind.

13. Gefäßhalterung nach Anspruch 12, dadurch gekennzeichnet, daß der erste und zweite Wandteil (32, 40) sich zueinander beabstandet auf gegenüberliegenden Seiten der Gefäßhalterung befinden, wobei die erste Seitenwand (12) mit dem ersten und zweiten Wandteil (32, 40) einen ersten Schlitz (44) begrenzen und die zweite Seitenwand (18) mit dem ersten und zweiten Wandteil (32, 40) einen zweiten Schlitz (46) begrenzen und wobei die beiden Schlitze (44, 46) sich auf bezüglich der ersten Ebene (24) gegenüberliegenden Seiten befinden.

## Claims

1. A container holder with a housing (10) and at least one substantially cylindrical housing wall (12, 18) which encloses a recess (26) and which has a lower first edge (16, 22) which is connected to a lower bottom surface (28) and an upper second edge (14, 20), wherein a ledge (30) extends radially outwards from the second edge (20), characterized in that the ledge (30) merely engages a part section of the periphery of the second edge (14) and in that the container holder comprises a bow-shaped collar element (50) which is pivotally attached to the housing wall (12, 18) and can be pivoted out of a first position, in which it is turned away from the ledge (30), into a second position, in which it at least partially overlaps the ledge (30), wherein the collar element (50) and the ledge (30) enclose an opening which, so long as the collar element (50) is in its first position, is smaller than the open end of the recess (26) bounded by the second edge (14, 20), when the collar element (50) is in its second position.

2. A container holder according to claim 1, characterized in that the housing (10) has a curved outer housing wall (32, 40) which extends from a lower end (34) to an upper free end (36) and in that the lower end (34) of the housing wall (32, 40) is connected section by section to an outer edge of the ledge (30) and the upper edge (14) of the housing wall (12).

3. A container holder according to claim 2, characterized in that at least a first and a second upwardly open slot (44, 46) are provided in the housing wall (32, 40), located on diametrically opposite sides of the container holder, and in that the collar element (50) carries in its middle region an outwardly extending tongue (52) which is received by the first slot (44) when the collar element (50) is in its first position and is received by the second slot (46) when the collar element (50) is in its second position.

4. A container holder according to any of claims 1 to 3, characterized in that the substantially cylindrical housing wall is composed in the peripheral direction of at least a first sidewall (12) with an upper edge (14) and a lower edge (16) and a second sidewall (18) with an upper edge (20) and a lower edge (22), in that the bottom surface (28) is connected to the lower edges (16, 22) of the first and second sidewalls (12, 18) and in that the sidewalls (12, 18) are connected together to form the recess (26).

5. A container holder according to claim 4, characterized in that the first sidewall (12) has a greater radius of curvature than the second sidewall (18).

6. A container holder according to claim 4 or 5, characterized in that the ledge (30) is connected to an upper edge (20) of the second sidewall (18).

7. A container holder according to any of claims 4 to 6, characterized in that the ledge (30) has an outer radius of curvature which corresponds substantially to the radius of curvature of the first sidewall (12).

8. A container holder according to any of claims 4 to 7, characterized in that the collar element (50) has an inner radius of curvature which is smaller than the radius of curvature of the first sidewall (12).

9. A container holder according to any of claims 4 to 8, characterized in that the collar element (50) has an outer radius of curvature which corresponds substantially to the radius of curvature of the first sidewall (12).

10. A container holder according to any of claims 4 to 9, characterized in that the collar element (50) rests on the upper edge (14) of the first sidewall in its first position and on the ledge (30) in its second position.

11. A container holder according to any of claims 4 to 10, characterized in that the first and second sidewalls (12, 18) are joined together along a first plane (24) which is parallel to the axis of the recess (26).

12. A container holder according to any of claims 2 to 11, characterized in that the outer sidewall includes a first, at least partially cylindrical wall part (32) and a second, at least partially cylindrical wall part (40) which extend substantially axially from a lower end (34) to an upper free end (36) and whose lower ends (34) are connected to an outer edge of the ledge (30) and to the upper end (14) of the first sidewall (12).

13. A container holder according to claim 12, characterized in that the first and second wall parts (32, 40) are spaced from one another on opposite sides of the container holder, wherein the first sidewall (12) bounds a first slot (44) with the first and second wall parts (32, 40) and the second sidewall (18) bounds a second slot (46) with the first and second wall parts (32, 40) and wherein the two slots (44, 46) are located on opposite sides in relation to the first plane (24).

## Revendications

1. Support pour récipient comportant un boîtier (10) et au moins une paroi essentiellement cylindrique (12,18) du boîtier, qui entoure un évidement (26) et comporte un premier bord inférieur (16,22), qui est relié à une surface inférieure de fond (28), et un second bord supérieur (14,20), un rebord (30) s'étendant radialement vers l'extérieur à partir du second bord (20), caractérisé en ce que le rebord (30) s'étend uniquement à partir d'une section partielle de la périphérie du second bord (14), et que le support pour récipient comporte un élément formant collet (50) de forme arquée, qui est relié de manière à pouvoir pivoter sur la paroi (12,18) du boîtier et peut basculer depuis une position, dans laquelle il est situé à l'opposé du rebord (30), pour venir dans une seconde position, dans laquelle il chevauche au moins partiellement le rebord (30), et dans la mesure où l'élément formant collet (50) est dans sa première position, l'élément formant collet (50) et le rebord (30) définissant entre eux une ouverture qui est plus petite que l'extrémité ouverte, délimitée par le second bord (14,20) de l'évidement (26), lorsque l'élément formant collet (50) est situé dans sa seconde position.

2. Support pour récipient selon la revendication 1, caractérisé en ce que le boîtier (10) possède une paroi extérieure cintrée (32,40), qui s'étend depuis une extrémité inférieure (34) jusqu'à une extrémité supérieure libre (36), que l'extrémité inférieure (34) de la paroi (32,40) du boîtier est reliée par intervalles à un bord extérieur du rebord (30) et au bord supérieur (14) de la paroi (12) du boîtier.

3. Support pour récipient selon la revendication 2, caractérisé en ce que sur la paroi (32,40) du boîtier sont prévues au moins des première et seconde fentes (44,46) ouvertes vers le haut, qui sont situées sur des côtés opposés du support pour récipient, et que l'élément formant collet (50) porte, dans sa partie médiane, une patte (32) qui s'étend vers l'extérieur et est reçue dans la première fente (44) lorsque l'élément formant collet (50) est situé dans sa première position, et qui est reçue dans la seconde fente (48) lorsque l'élément formant collet (50) est situé dans sa seconde position.

4. Support pour récipient selon l'une des revendications 1 à 3, caractérisé en ce que la paroi essentiellement cylindrique du boîtier comprend, dans la direction circonférentielle, au moins une première paroi latérale (12) comportant un bord supérieur (14) et un bord inférieur (16) ainsi qu'une seconde paroi latérale (18) comportant un bord supérieur (20) et un bord inférieur (22), que la surface (28) du fond est reliée aux bords inférieurs (16,22) des première et seconde parois latérales (12,18) et que les parois latérales (12,18) sont reliées entre elles de manière à former l'évidement (26).

5. Support pour récipient selon la revendication 4, caractérisé en ce que la première paroi latérale (12) possède un rayon de courbure supérieur à celui de la seconde paroi latérale (18).

6. Support pour récipient selon l'une des revendications 4 ou 5, caractérisé en ce que le rebord (30) est relié à un bord supérieur (20) de la seconde paroi latérale (18).

7. Support pour récipient selon l'une des revendications 4 à 6, caractérisé en ce que le rebord (30) possède un rayon de courbure extérieur, qui correspond essentiellement au rayon de courbure de la première paroi latérale (12).

8. Support pour récipient selon l'une des revendications 4 à 7, caractérisé en ce que l'élément formant collet (50) possède un rayon de courbure intérieur, qui est inférieur au rayon de courbure de la première paroi latérale (12).

9. Support pour récipient selon l'une des revendications 4 à 8, caractérisé en ce que l'élément formant collet (50) possède un rayon de courbure extérieur, qui correspond essentiellement au rayon de courbure de la première paroi latérale (12).

10. Support pour récipient selon l'une des revendications 4 à 9, caractérisé en ce que, dans sa première position l'élément formant collet (50) s'applique, sur le bord supérieur (14) de la première paroi latérale et, dans sa seconde position, sur le rebord (30).

11. Support pour récipient selon l'une des revendications 4 à 10, caractérisé en ce que les première et seconde parois latérales (12,18) sont reliées entre elles dans un premier plan (24), qui est parallèle à l'axe de l'évidement (26).

12. Support pour récipient selon l'une des revendications 2 à 11, caractérisé en ce que la paroi latérale extérieure comporte une première partie au moins partiellement cylindrique (39) et une seconde partie au moins partiellement cylindrique (40), qui s'étendent essentiellement axialement depuis l'extrémité inférieure (34) jusqu'à une extrémité supérieure libre (36) et dont les extrémités inférieures (34) sont reliées à un bord extérieur du rebord (30) ainsi qu'à l'extrémité supérieure (14) de la première paroi latérale (12).

13. Support pour récipient selon la revendication 12, caractérisé en ce que les première et seconde parties (32,40) de la paroi sont situées à distance l'une de l'autre sur des côtés opposés du support pour récipient, la première paroi latérale (12) délimitant, avec les première et seconde parties de paroi (32,40), une première fente (44), tandis que la seconde paroi latérale (18) délimite, avec les première et seconde parties de paroi (32,40), une seconde fente (46), et les deux fentes (44,46) sont situées sur des côtés opposés par rapport au premier plan (24).
